# EUROPEAN PATENT APPLICATION

(11) **EP 3 890 212 A1**
(43) Date of publication of application: **06.10.2021**
(21) Application number: 19925474.9
(22) Date of filing: 02.12.2019
(51) Int. Cl.: H04B 10/61

(54) **COHERENT LIGHT RECEIVING DEVICE AND OPTICAL SIGNAL DEMODULATION DEVICE**

(30) Priority: 16.04.2019 CN 201910305380
(71) Applicant: Huawei Technologies Co., Ltd., Shenzhen Guangdong 518129 (CN)
(72) Inventor: ZHAO, Ping, Shenzhen, Guangdong 518129 (CN); LI, Liangchuan, Shenzhen, Guangdong 518129 (CN); GUI, Tao, Shenzhen, Guangdong 518129 (CN)
(74) Representative: Thun, Clemens
(86) International application number: PCT/CN2019/122376
(87) International publication number: WO 2020/211390

(57) **Abstract**

The embodiments of this application provide a coherent optical receiving apparatus and an optical signal demodulation apparatus, to eliminate a special requirement that a polarization state of local oscillator light that is input to the coherent optical receiving apparatus needs to be fixed, and improve universal adaptability of a coherent optical transmission technology. A method of this application includes a polarization beam splitting unit, an optical frequency mixing unit, and a combining unit. The polarization beam splitting unit is connected to an input end of the optical frequency mixing unit, and the combining unit is connected to an output end of the optical frequency mixing unit. The polarization beam splitting unit is configured to receive local oscillator light in any polarization state, and perform polarization state split on the received local oscillator light to obtain first polarized light in an orthogonal polarization state. The optical frequency mixing unit is configured to perform frequency mixing on the first polarized light and second polarized light, and output mixed light to the combining unit. The second polarized light is polarized light in an orthogonal polarization state obtained by splitting signal light. The combining unit is configured to combine every two paths of light output by the optical frequency mixing unit into one path for output.

## Description

This application claims priority to Chinese Patent Application No. 201910305380.2, filed with the China National Intellectual Property Administration on April 16, 2019 and entitled "COHERENT OPTICAL RECEIVING APPARATUS AND OPTICAL SIGNAL DEMODULATION APPARATUS", which is incorporated herein by reference in its entirety.

### TECHNICAL FIELD

This application relates to the field of coherent optical communications technologies, and in particular, to a coherent optical receiving apparatus and an optical signal demodulation apparatus.

### BACKGROUND

A coherent optical transmission technology is widely used due to a large transmission capacity and a long transmission distance. At a receive end of a coherent optical communications system, local oscillator light and signal light are input to a frequency mixing apparatus for frequency mixing, mixed output light is converted into an electrical signal, and amplitude and phase information of the signal light may be obtained through sampling, analog-to-digital conversion, and digital signal processing, to implement a decoding function.

Currently, a frequency mixing apparatus (for example, a conventional coherent optical frequency mixing unit or a frequency mixer) used in the industry needs to input local oscillator light in a fixed polarization state. Because such a special requirement for a polarization state of local oscillator light cannot be met in a network, for example, a data center network (data center network, DCN), the frequency mixing apparatus currently used in the industry cannot work normally. Consequently, the coherent optical transmission technology cannot be applied to a network application scenario, for example, the DCN, and universal adaptability of the coherent optical transmission technology is poor.

### SUMMARY

To overcome the foregoing disadvantages in the background, embodiments of this application provide a coherent optical receiving apparatus and an optical signal demodulation apparatus, to ensure that when local oscillator light in any polarization state is input to the coherent optical receiving apparatus, the coherent optical receiving apparatus can work normally, so as to implement a frequency mixing function, eliminate a special requirement that a polarization state of the local oscillator light that is input to the coherent optical receiving apparatus needs to be fixed, and improve universal adaptability of a coherent optical transmission technology.

To achieve the foregoing technical objectives, an embodiment of this application provides a coherent optical receiving apparatus, including a polarization beam splitting unit, an optical frequency mixing unit, and a combining unit. The polarization beam splitting unit is connected to an input end of the optical frequency mixing unit, and the combining unit is connected to an output end of the optical frequency mixing unit. The polarization beam splitting unit is configured to receive local oscillator light in any polarization state, and perform polarization state split on the received local oscillator light to obtain first polarized light in a linear polarization state, so as to input the first polarized light to the optical frequency mixing unit. The optical frequency mixing unit is configured to perform frequency mixing on the first polarized light and second polarized light, and output mixed light to the combining unit. The second polarized light is polarized light in a linear polarization state obtained by splitting signal light. The combining unit is configured to combine every two paths of light output by the optical frequency mixing unit into one path for output. Optionally, the combining unit may specifically combine every two paths of mixed optical signals in a same polarization state output by the optical frequency mixing unit into one path.

It can be learned from the foregoing technical solutions that this embodiment of this application has the following advantages: Compared with a conventional frequency mixing apparatus, the polarization beam splitting unit is added to the coherent optical receiving apparatus in this embodiment of this application to perform polarization state split on the local oscillator light in any polarization state, so as to obtain polarized light in a corresponding linear polarized state. Through the foregoing improvement on the conventional frequency mixing apparatus, when the local oscillator light in any polarization state is input to the coherent optical receiving apparatus, the coherent optical receiving apparatus in this embodiment of this application can work normally, so as to implement a frequency mixing function, eliminate a special requirement that a polarization state of the local oscillator light that is input to the coherent optical receiving apparatus needs to be fixed, and improve universal adaptability of a coherent optical transmission technology.

Further, the combining unit is newly designed for the foregoing coherent optical receiving apparatus. The combining unit may combine and output light output by the optical frequency mixing unit. Specifically, the combining unit combines every two paths of light into one path for output, to reduce output optical paths in the coherent optical receiving apparatus.

In a possible implementation of the first aspect, the optical frequency mixing unit may be a conventional coherent optical frequency mixing unit or a frequency mixer, and the conventional coherent optical frequency mixing unit is obtained by integrating the frequency mixer.

In a possible implementation of the first aspect, if the optical frequency mixing unit is the conventional coherent optical frequency mixing unit, the polarization beam splitting unit may be a polarization beam splitter or a polarization rotator-splitter, and the combining unit is a polarization rotator-combiner.

In a possible implementation of the first aspect, if the optical frequency mixing unit is the frequency mixer, the polarization beam splitting unit may include a power beam splitter and a polarization beam splitter, or the polarization beam splitting unit includes a power beam splitter and a polarization rotator-splitter, and the combining unit is a polarization rotator-combiner.

It should be noted that, the foregoing polarization beam splitting unit and the foregoing combining unit both use a waveguide optical component such as a power beam splitter, a polarization beam splitter, a polarization rotator-splitter, or a polarization rotator-combiner. Compared with a spatial optical component, for example, a lens, a reflection mirror, or a wave plate, the waveguide optical component has a low precision requirement on manufacture, is easy to manufacture and integrate, and facilitates large-scale production.

In a possible implementation of the first aspect, the optical frequency mixing unit includes two conventional coherent optical frequency mixing units, namely, a first conventional coherent optical frequency mixing unit and a second conventional coherent optical frequency mixing unit. The polarization beam splitting unit is a first polarization beam splitter. The combining unit is an array including at least two polarization rotator-combiners, and the array is referred to as a first array. The first polarization beam splitter is configured to split the local oscillator light in any polarization state into first X-polarized light and first Y-polarized light, and respectively input the first X-polarized light and the first Y-polarized light to the first conventional coherent optical frequency mixing unit and the second conventional coherent optical frequency mixing unit after splitting for frequency mixing. The first array is configured to combine light from an x^{th} port in the first conventional coherent optical frequency mixing unit and light from an (x + a/2)^{th} port in the second conventional coherent optical frequency mixing unit into one path, and combine light from an (x + a/2)^{th} port in the first conventional coherent optical frequency mixing unit and light from an x^{th} port in the second conventional coherent optical frequency mixing unit into one path, where x is a positive integer less than or equal to (a/2), a is a total quantity of polarization rotator-combiners, a value of a is an even number greater than or equal to 0, and a total quantity of ports in the first conventional coherent optical frequency mixing unit and a total quantity of ports in the second conventional coherent optical frequency mixing unit are both equal to a.

For example, a total quantity of ports in the first conventional coherent optical frequency mixing unit and a total quantity of ports in the second conventional coherent optical frequency mixing unit are 8, in other words, a is equal to 8, and a value of x is 1, 2, 3 or 4. In this case, the first array is an array including eight polarization rotator-combiners. A specific manner of combining optical paths is as follows: A first polarization rotator-combiner combines light from a port 1 in the first conventional coherent optical frequency mixing unit and light from a port 5 in the second conventional coherent optical frequency mixing unit into one path. A second polarization rotator-combiner combines light from a port 2 in the first conventional coherent optical frequency mixing unit and light from a port 6 in the second conventional coherent optical frequency mixing unit into one path. A third polarization rotator-combiner combines light from a port 3 in the first conventional coherent optical frequency mixing unit and light from a port 7 in the second conventional coherent optical frequency mixing unit into one path. A fourth polarization rotator-combiner combines light from a port 4 in the first conventional coherent optical frequency mixing unit and light from a port 8 in the second conventional coherent optical frequency mixing unit into one path. A fifth polarization rotator-combiner combines light from a port 5 in the first conventional coherent optical frequency mixing unit and light from a port 1 in the second conventional coherent optical frequency mixing unit into one path. A sixth polarization rotator-combiner combines light from a port 6 in the first conventional coherent optical frequency mixing unit and light from a port 2 in the second conventional coherent optical frequency mixing unit into one path. A seventh polarization rotator-combiner combines light from a port 7 in the first conventional coherent optical frequency mixing unit and light from a port 3 in the second conventional coherent optical frequency mixing unit into one path. An eighth polarization rotator-combiner combines light from a port 8 in the first conventional coherent optical frequency mixing unit and light from a port 4 in the second conventional coherent optical frequency mixing unit into one path. Therefore, output optical paths in the coherent optical receiving apparatus changes from eight optical paths into four output optical paths in the conventional coherent optical frequency mixing unit.

It should be noted that the first polarization beam splitter in this implementation may be replaced with a first polarization rotator-splitter, and details are not described herein again.

In a possible implementation of the first aspect, the optical frequency mixing unit includes a first frequency mixer, a second frequency mixer, a third frequency mixer, and a fourth frequency mixer. The combining unit is an array including at least two polarization rotator-combiners, and the array is referred to as a second array. The second array is configured to combine light from a y^{th} port in the first frequency mixer and light from a y^{th} port in the third frequency mixer into one path, and combine light from a y^{th} port in the second frequency mixer and light from a y^{th} port in the fourth frequency mixer into one path, where y is a port number of the frequency mixer, a value of y is a positive integer less than or equal to b, b is a total quantity of ports in the frequency mixer, and a value of b is an even number greater than or equal to 0. In other words, the second array is configured to combine light corresponding to ports that have a same port number and that are in the first frequency mixer and the third frequency mixer, and combine light from ports that have a same port number and that are in the second frequency mixer and the fourth frequency mixer.

For example, a total quantity of ports in the frequency mixer b is equal to 4, and the combining unit is a second array including eight polarization rotator-combiners. A first polarization rotator-combiner combines light from a port 1 in the first frequency mixer and light from a port 1 in the third frequency mixer into one path. A second polarization rotator-combiner combines light from a port 2 in the first frequency mixer and light from a port 2 in the third frequency mixer into one path. A third polarization rotator-combiner combines light from a port 3 in the first frequency mixer and light from a port 3 in the third frequency mixer into one path. A fourth polarization rotator-combiner combines light from a port 4 in the first frequency mixer and light from a port 4 in the third frequency mixer into one path. A fifth polarization rotator-combiner combines light from a port 1 in the second frequency mixer and light from a port 1 in the fourth frequency mixer into one path. A sixth polarization rotator-combiner combines light from a port 2 in the second frequency mixer and light from a port 2 in the fourth frequency mixer into one path. A seventh polarization rotator-combiner combines light from a port 3 in the second frequency mixer and light from a port 3 in the fourth frequency mixer into one path. An eighth polarization rotator-combiner combines light from a port 4 in the second frequency mixer and light from a port 4 in the fourth frequency mixer into one path.

In the foregoing implementation that the optical frequency mixing unit includes the first frequency mixer, the second frequency mixer, the third frequency mixer, and the fourth frequency mixer, and the combining unit is the array including the at least two polarization rotator-combiners, the polarization beam splitting unit may be implemented in the following two manners.

In a first implementation, the polarization beam splitting unit includes a polarization beam splitter (namely, a second polarization beam splitter), and two power beam splitters (namely, a first power beam splitter and a second power beam splitter). The second polarization beam splitter is configured to split the local oscillator light in any polarization state into second X-polarized light and second Y-polarized light, and respectively input the second X-polarized light and the second Y-polarized light to the first power beam splitter and the second power beam splitter. Further, the first power beam splitter and the second power beam splitter respectively split the second X-polarized light and the second Y-polarized light into two parts and input the four parts to four frequency mixers. In other words, the first power beam splitter splits the second X-polarized light into two parts and respectively inputs the two parts to the first frequency mixer and the second frequency mixer, and the second power beam splitter the second Y-polarized light into two parts, and respectively input the two parts to the third frequency mixer and the fourth frequency mixer.

In a second implementation, the polarization beam splitting unit includes a power beam splitter (namely, a third power beam splitter), and two polarization beam splitters (namely, a third polarization beam splitter and a fourth polarization beam splitter). The third power beam splitter is configured to split the local oscillator light in any polarization state into two parts, and respectively input the two parts to the third polarization beam splitter and the fourth polarization beam splitter. The third polarization beam splitter is configured to split one part of the input local oscillator light into third X-polarized light and third Y-polarized light, and respectively input the third X-polarized light and the third Y-polarized light to the first frequency mixer and the second frequency mixer. The fourth polarization beam splitter is configured to split the other part of the input local oscillator light into fourth X-polarized light and fourth Y-polarized light, and respectively input the fourth X-polarized light and the fourth Y-polarized light to the third frequency mixer and the fourth frequency mixer.

In a possible implementation of the first aspect, the polarization beam splitting unit further includes at least one of the following: a phase shifter and a half-wave plate. The phase shifter is configured to adjust a phase of light, before the light is input to a local oscillator light port in the first frequency mixer, the second frequency mixer, the third frequency mixer, or the fourth frequency mixer. The half-wave plate is configured to rotate a polarization state of polarized light obtained by splitting the local oscillator light.

In a possible implementation of the first aspect, the coherent optical receiving apparatus may further include at least one of the following: an optical anti-reflective coating, an optical waveguide, a lens, an optical monitor, or a photoelectric detector.

According to a second aspect, an embodiment of this application further provides an optical signal demodulation apparatus. The optical signal demodulation apparatus includes the coherent optical receiving apparatus in the first aspect and any one of the implementations of the first aspect.

In a possible implementation of the second aspect, the optical signal demodulation apparatus further includes at least one of the following: a direct current filter, a trans-impedance amplifier, an analog-to-digital converter, or a digital signal processor.

### BRIEF DESCRIPTION OF DRAWINGS

FIG. 1 is a schematic diagram of an embodiment of a coherent optical receiving apparatus according to an embodiment of this application;
FIG. 2 is a schematic structural diagram of a conventional 2 x 8 coherent optical frequency mixing unit;
FIG. 3 is a schematic structural diagram of a 2 x 4 frequency mixer;
FIG. 4 is a schematic diagram of an embodiment of a coherent optical receiving apparatus according to an embodiment of this application;
FIG. 5 is another schematic diagram of an embodiment of a coherent optical receiving apparatus according to an embodiment of this application;
FIG. 6 is another schematic diagram of an embodiment of a coherent optical receiving apparatus according to an embodiment of this application;
FIG. 7 is a schematic structural diagram of a polarization beam splitter or a polarization rotator-splitter that automatically adjusts polarization state power according to an embodiment of this application; and
FIG. 8 is an optical signal demodulation apparatus based on a coherent optical receiving apparatus.

### DESCRIPTION OF EMBODIMENTS

The following describes embodiments of this application with reference to the accompanying drawings. It is clear that the described embodiments are merely a part rather than all of the embodiments of this application. A person of ordinary skill in the art may learn that as a technology evolves and a new scenario emerges, technical solutions provided in the embodiments of this application are also applicable to a similar technical problem.

The embodiments of this application provide a coherent optical receiving apparatus and an optical signal demodulation apparatus, to eliminate a special requirement that a polarization state of local oscillator light that is input to the coherent optical receiving apparatus needs to be fixed, and improve universal adaptability of a coherent optical transmission technology.

The term "and/or" appeared in this application describes only an association relationship for describing associated objects and represents that three relationships may exist. For example, A and/or B may represent the following three cases: Only A exists, both A and B exist, and only B exists. In addition, the character "/" in this application generally indicates an "or" relationship between the associated objects.

In the specification, claims, and the accompanying drawings of this application, the terms "first", "second", and the like are intended to distinguish similar objects but do not necessarily indicate a specific order or sequence. It should be understood that data used in such a way is interchangeable in a proper circumstance, so that the embodiments described herein can be implemented in an order other than the order illustrated or described herein. In addition, the terms "include", "contain" and any other variants mean to cover the non-exclusive inclusion, for example, a process, method, system, product, or device that includes a list of steps or modules is not necessarily limited to those steps or modules, but may include other steps or modules not expressly listed or inherent to such a process, method, system, product, or device. Naming or numbering of steps in this application does not mean that the steps in the method procedures need to be performed in a time/logical order indicated by the naming or numbering. An execution order of the steps in the procedures that have been named or numbered can be changed based on a technical objective to be achieved, as long as same or similar technical effects can be achieved. Division into modules in this application is logical division and may be another division in an actual implementation. For example, a plurality of modules may be combined or integrated into another system, or some features may be ignored or not performed. In addition, the displayed or discussed mutual couplings or direct couplings or communication connections may be implemented through some interfaces. The indirect couplings or communication connections between the modules may be implemented in electronic or other similar forms. This is not limited in this application. In addition, modules or sub-modules described as separate components may be or may not be physically separated, may be or may not be physical modules, or may be distributed into a plurality of circuit modules. Objectives of the solutions of this application may be achieved by selecting some or all of the modules based on an actual requirement.

For ease of understanding the coherent optical receiving apparatus provided in the embodiments of this application, the following describes in detail the coherent optical receiving apparatus in the embodiments of this application with reference to specific embodiments. Details are as follows:

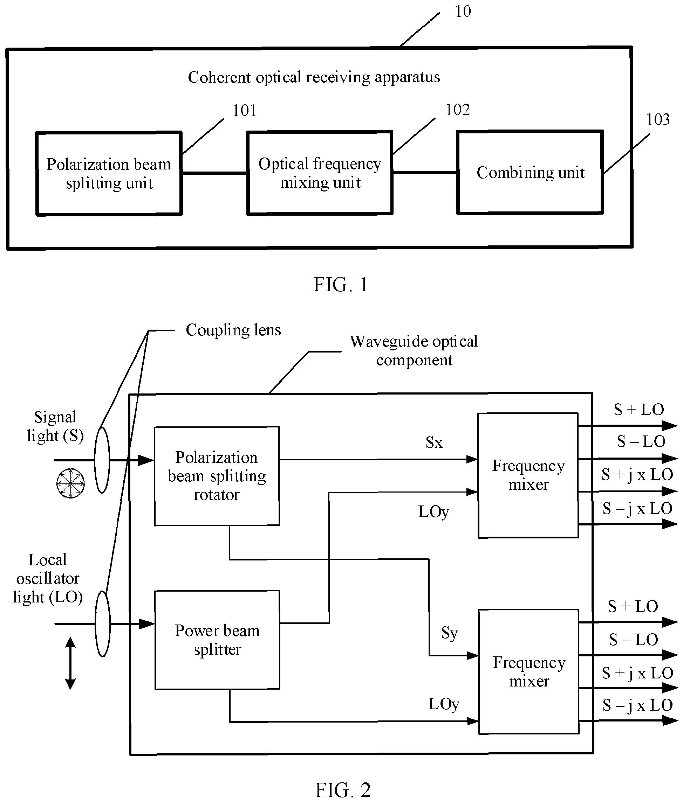

FIG. 1 is a schematic diagram of an embodiment of a coherent optical receiving apparatus according to an embodiment of this application.

As shown in FIG. 1, a coherent optical receiving apparatus 10 in this embodiment of this application includes a polarization beam splitting unit 101, an optical frequency mixing unit 102, and a combining unit 103. Local oscillator light in any polarization state is input to an input end of the polarization beam splitting unit 101 in the coherent optical receiving apparatus 10. The polarization beam splitting unit 101 splits the polarization state of the received local oscillator light to obtain first polarized light in a linear polarization state. The first polarized light is input to the optical frequency mixing unit 102. The optical frequency mixing unit 102 performs frequency mixing on the first polarized light and second polarized light, and outputs mixed light to the combining unit 103. The second polarized light is polarized light in a linear polarization state obtained by splitting signal light. The combining unit 103 combines every two paths of light output by the optical frequency mixing unit 102 into one path for output, so that a quantity of final output optical paths in the coherent optical receiving apparatus 10 is reduced to half of a quantity of output optical paths in the optical frequency mixing unit 102. Optionally, the combining unit 103 may specifically combine every two paths of mixed optical signals in a same polarization state output by the optical frequency mixing unit 102 into one path.

In an implementation, the optical frequency mixing unit 102 may be a conventional coherent optical frequency mixing unit or a frequency mixer, and the conventional coherent optical frequency mixing unit is obtained by integrating the frequency mixer. The following separately describes in detail structures of the conventional coherent optical frequency mixing unit and the frequency mixer.

FIG. 2 is a schematic structural diagram of a conventional 2 x 8 coherent optical frequency mixing unit.

As shown in FIG. 2, the conventional 2 x 8 coherent optical frequency mixing unit is a coherent optical frequency mixing unit with two input optical ports and eight output optical ports. The conventional 2 x 8 coherent optical frequency mixing unit includes a coupling lens and a waveguide optical component. The waveguide optical component specifically includes two frequency mixers, one polarization rotator splitter, and one power beam splitter. Signal light S in any polarization state is input to the polarization rotator splitter through the coupling lens, and local oscillator light LO in a fixed polarization state (for example, a polarization state Y) is input to the power beam splitter through the coupling lens. Then, the polarization rotator splitter splits the signal light S into polarized light Sx and polarized light Sy, and the polarized light Sx and the polarized light Sy are respectively input to the two frequency mixers by using a waveguide. The power beam splitter splits the local oscillator light in the polarization state Y into two beams of polarized light LOy, and the two beams of polarized light LOy enter the two frequency mixers respectively by using the waveguide. The two frequency mixers respectively perform frequency mixing on the polarized light Sx and the polarized light LOy, and the polarized light Sy and the polarized light LOy, and then output four corresponding paths of output light: S + LO, S - LO, S + j x LO, and S - j x LO. The two frequency mixers output a total of eight paths of light.

It should be noted that both a polarization state X and the polarization state Y are linear polarization states. The local oscillator light in the fixed polarization state is substantially polarized light, in other words, the local oscillator light in the polarization state Y is equivalent to Y-polarized light, and local oscillator light in the polarization state X is equivalent to X-polarized light. That the Y-polarized light and the X-polarized light are respectively referred to as the local oscillator light in the polarization state Y and the local oscillator light in the polarization state X is intended to be distinguished from signal light. The coupling lens is merely a common lens, and is referred to as a coupling lens because the lens is used for optical coupling herein. A meaning of the coupling lens mentioned below is similar to the coupling lens herein, and details are not described again below.

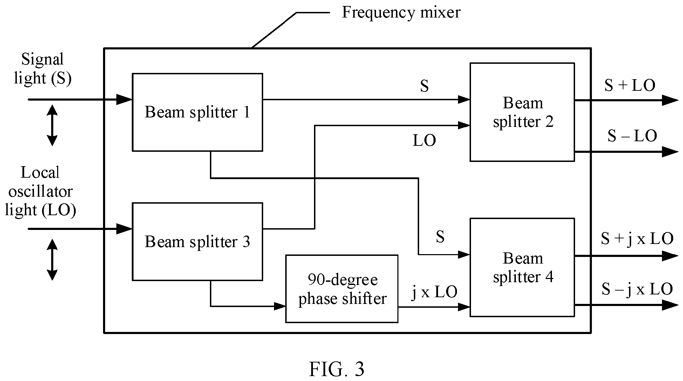

It should be further noted that the polarization beam splitter may be a polarization beam splitter, PBS for short. The power beam splitter is a functional description to distinguish the power beam splitter from the polarization beam splitter, and refers to a beam splitter (beam splitter, BS) that directly splits light into two parts without changing a polarization state of the light. A structure of the frequency mixer in FIG. 2 is similar to a structure of a 2 x 4 frequency mixer shown in FIG. 3. For detailed descriptions, refer to related descriptions in FIG. 3. Details are not described herein.

FIG. 3 is a schematic structural diagram of a 2 x 4 frequency mixer.

As shown in FIG. 3, the 2 x 4 frequency mixer is a mixer with two input optical ports and four output optical ports. The 2 x 4 frequency mixer shown in FIG. 3 includes four beam splitters and one 90-degree phase shifter. One of the two input optical ports is a local oscillator light input port and the other is a signal light input port. Each of the two input optical ports requires that a polarization state of input light be a linear polarization state. In other words, signal light and local oscillator light input to the 2 x 4 frequency mixer needs to be linearly polarized light. The four beam splitters are a beam splitter 1, a beam splitter 2, a beam splitter 3, and a beam splitter 4 respectively. The beam splitter 1 splits signal light S into two parts, and respectively inputs the two parts to the beam splitter 2 and the beam splitter 4. The beam splitter 3 splits local oscillator light into two parts, and directly inputs one part to the beam splitter 2, and input the other part to the beam splitter 4 after the other part passes through the 90-degree phase shifter. The beam splitter 2 combines the signal light and the local oscillator light and then outputs combined light. The beam splitter 4 combines the signal light and local oscillator light with a phase shift of 90 degrees, and then outputs combined light.

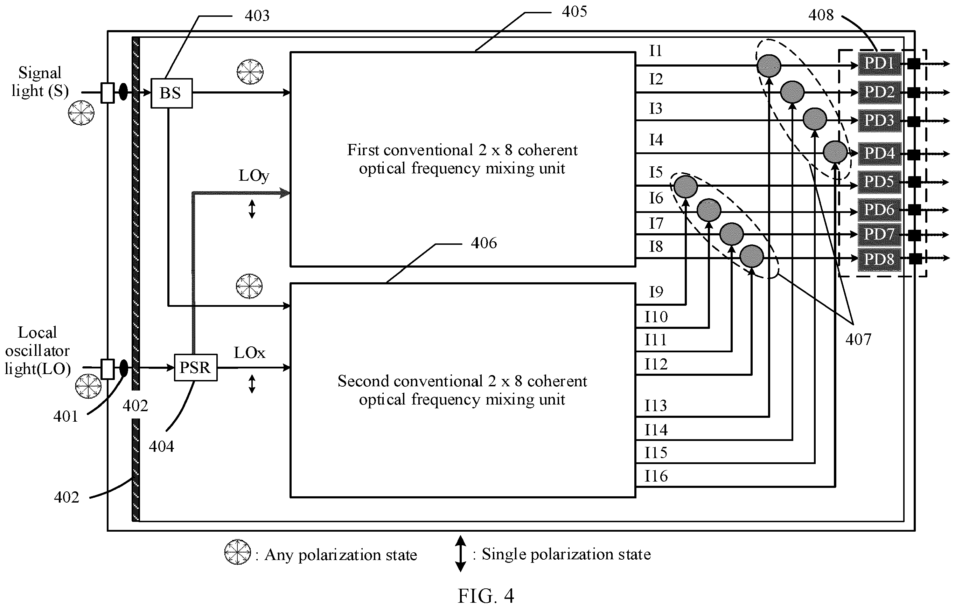

In an implementation, the optical frequency mixing unit includes two conventional coherent optical frequency mixing units, namely, a first conventional coherent optical frequency mixing unit and a second conventional coherent optical frequency mixing unit. The combining unit 103 may be an array including at least two polarization rotator-combiners, and the array is referred to as a first array. The first array is specifically configured to combine light from an x^{th} port in the first conventional coherent optical frequency mixing unit and light from an (x + a/2)^{th} port in the second conventional coherent optical frequency mixing unit into one path, and combine light from an (x + a/2)^{th} port in the first conventional coherent optical frequency mixing unit and light from an x^{th} port in the second conventional coherent optical frequency mixing unit into one path, where x is a positive integer less than or equal to (a/2), a is a total quantity of polarization rotator-combiners, a value of a is an even number greater than or equal to 0, and a total quantity of ports in the first conventional coherent optical frequency mixing unit and a total quantity of ports in the second conventional coherent optical frequency mixing unit are both equal to a. For specific descriptions of this implementation, refer to the following related descriptions in the embodiment corresponding to FIG. 4. Details are not described herein.

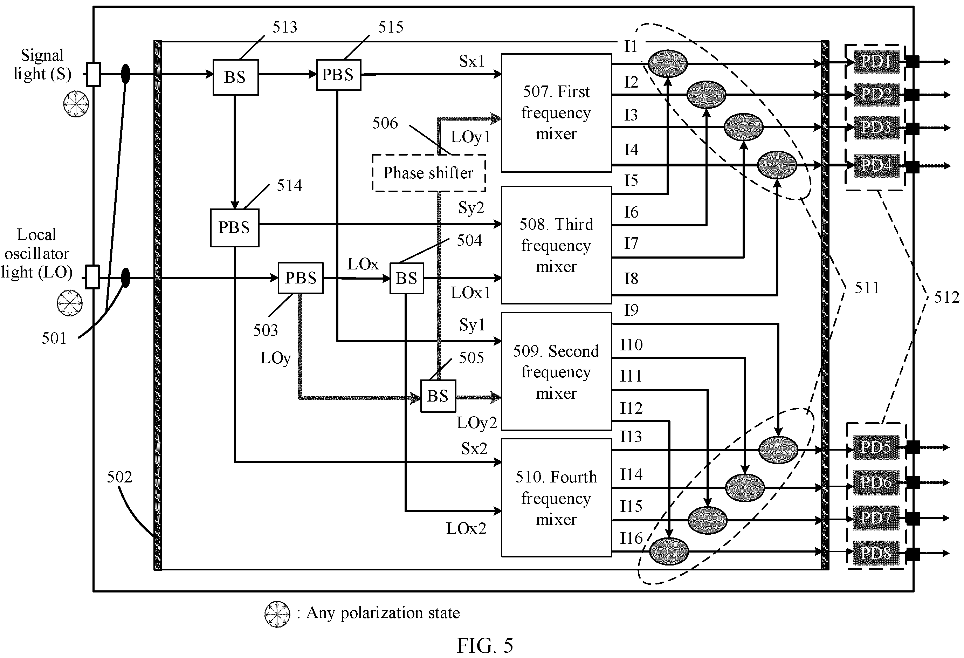

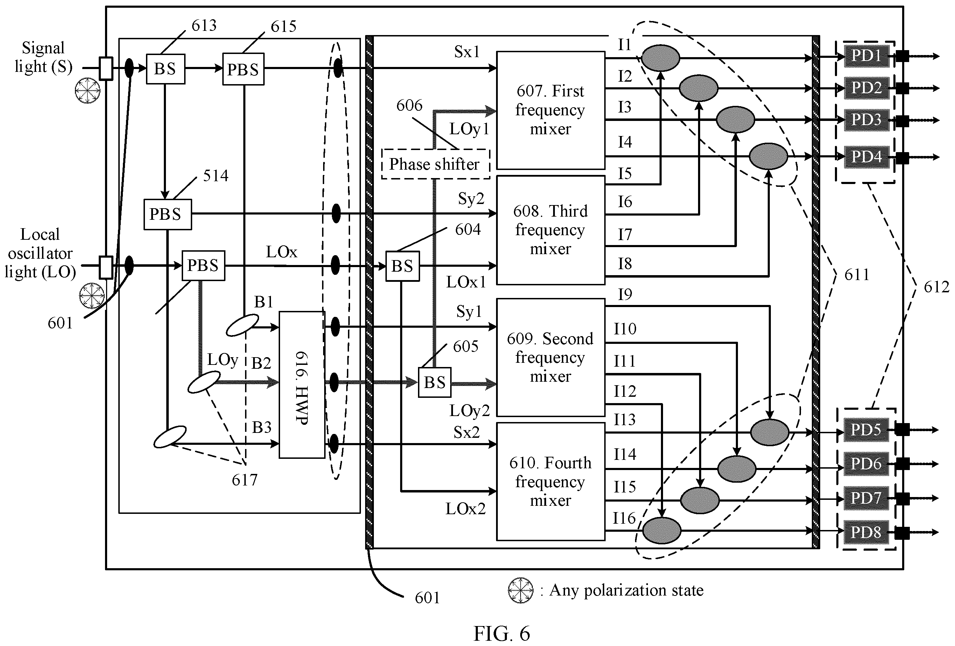

In an implementation, the optical frequency mixing unit includes a first frequency mixer, a second frequency mixer, a third frequency mixer, and a fourth frequency mixer. The combining unit may be an array including at least two polarization rotator-combiners, and the array is referred to as a second array. The second array is configured to combine light from a y^{th} port in the first frequency mixer and light from a y^{th} port in the third frequency mixer into one path, and combine light from a y^{th} port in the second frequency mixer and light from a y^{th} port in the fourth frequency mixer into one path, where y is a port number of the frequency mixer, a value of y is a positive integer less than or equal to b, b is a total quantity of ports in the frequency mixer, and a value of b is an even number greater than or equal to 0. In other words, the second array is configured to combine light corresponding to ports that have a same port number and that are in the first frequency mixer and the third frequency mixer. For specific descriptions of this implementation, refer to the following related descriptions in the embodiment corresponding to FIG. 5 and FIG. 6. Details are not described herein.

It can be learned from the foregoing implementations that the optical frequency mixing unit in the coherent optical receiving apparatus provided in the embodiments of this application may be implemented by using the following two implementations. The following separately describes the foregoing implementations.

In a first implementation, the optical frequency mixing unit includes conventional coherent optical frequency mixing units. In the first implementation, the optical frequency mixing unit may include two or more conventional coherent optical frequency mixing units. The conventional coherent optical frequency mixing unit may use the conventional 2 x 8 coherent optical frequency mixing unit with two input optical ports and eight output optical ports shown in FIG. 2, or a conventional coherent optical frequency mixing unit of another specification.

The following describes in detail the optical frequency mixing unit provided in the embodiments of this application by using an example in which an optical frequency mixing unit including two conventional 2 x 8 coherent optical frequency mixing units.

FIG. 4 is a schematic diagram of an embodiment of a coherent optical receiving apparatus according to an embodiment of this application.

As shown in FIG. 4, the coherent optical receiving apparatus includes a power beam splitter 403, a polarization beam splitter 404, a first conventional 2 x 8 coherent optical frequency mixing unit 405, a second conventional 2 x 8 coherent optical frequency mixing unit 406, and a first array 407, where the first array 407 includes eight polarization rotator-combiners.

In FIG. 4, the power beam splitter is referred to as a BS for short, and the polarization beam splitter (polarization beam splitter, PBS) is referred to as a PBS for short. It should be noted that the polarization beam splitter may also be replaced with a polarization rotator-splitter (polarization rotator-splitter, PRS) having a similar function, and details are not described herein.

The eight polarization rotator-combiners in the first array 407 are configured to couple output of the first conventional 2 x 8 coherent optical frequency mixing unit 405 and output of the second conventional 2 x 8 coherent optical frequency mixing unit 406, to reduce a quantity of output optical paths.

Specifically, as shown in FIG. 4, a first polarization rotator-combiner couples a port 1 in the first conventional 2 x 8 coherent optical frequency mixing unit 405 and a port 5 in the second conventional 2 x 8 coherent optical frequency mixing unit 406 into one path, in other words, couples 11 and 113 shown in FIG. 4 into one path. A second polarization rotator-combiner couples a port 2 in the first conventional 2 x 8 coherent optical frequency mixing unit 405 and a port 6 in the second conventional 2 x 8 coherent optical frequency mixing unit 406 into one path, in other words, couples 12 and 114 shown in FIG. 4 into one path. A third polarization rotator-combiner couples a port 3 in the first conventional 2 x 8 coherent optical frequency mixing unit 405 and a port 7 in the second conventional 2 x 8 coherent optical frequency mixing unit 406 into one path, in other words, couples 13 and 115 shown in FIG. 4 into one path. A fourth polarization rotator-combiner couples a port 4 in the first conventional 2 x 8 coherent optical frequency mixing unit 405 and a port 8 in the second conventional 2 x 8 coherent optical frequency mixing unit 406 into one path, in other words, couples 14 and 116 shown in FIG. 4 into one path. A fifth polarization rotator-combiner couples a port 5 in the first conventional 2 x 8 coherent optical frequency mixing unit 405 and a port 1 in the second conventional 2 x 8 coherent optical frequency mixing unit 406 into one path, in other words, couples 15 and 19 shown in FIG. 4 into one path. A sixth polarization rotator-combiner couples a port 6 in the first conventional 2 x 8 coherent optical frequency mixing unit 405 and a port 2 in the second conventional 2 x 8 coherent optical frequency mixing unit 406 into one path, in other words, couples 16 and 110 shown in FIG. 4 into one path. A seventh polarization rotator-combiner couples a port 7 in the first conventional 2 x 8 coherent optical frequency mixing unit 405 and a port 3 in the second conventional 2 x 8 coherent optical frequency mixing unit 406 into one path, in other words, couples 17 and I11 shown in FIG. 4 into one path. An eighth polarization rotator-combiner couples a port 8 in the first conventional 2 x 8 coherent optical frequency mixing unit 405 and a port 4 in the second conventional 2 x 8 coherent optical frequency mixing unit 406 into one path, in other words, couples 18 and 112 shown in FIG. 4 into one path.

Optionally, as shown in FIG. 4, the optical frequency mixing unit may further include at least one of a coupling lens 401, an optical anti-reflective coating 402, and a detector array 408. The detector array 408 includes two or more photoelectric detectors (photoelectric detector, PD), and a quantity of PDs is equal to the quantity of output optical paths in the first array 407. The quantity of PDs shown in FIG. 4 is 8. Optionally, the detector array 408 is connected to the first array 407 by using a polarization-maintaining optical waveguide, to ensure that a polarization state corresponding to light output from the first array 407 remains unchanged in a transmission process of transmitting the light to the detector array 408.

It should be understood that the PD in the detector array 408 may convert an optical signal into an electrical signal, to perform subsequent operations such as sampling, analog-to-digital conversion, and digital signal processing on the electrical signal as described in the background, so as to implement a decoding function. The coupling lens 401 may implement a coupling connection between an optical signal (signal light and local oscillator light) transmitter and the coherent optical receiving apparatus described in FIG. 4, to transmit an optical signal from the optical signal transmitter to the coherent optical receiving apparatus. The optical anti-reflective coating 402 is configured to reduce energy losses of an optical signal in a transmission process. The optical anti-reflective coating 402 is plated on at least one end of an input end or an output end of a waveguide optical component including the power beam splitter 403, the polarization beam splitter 404, the first conventional 2 x 8 coherent optical frequency mixing unit 405, the second conventional 2 x 8 coherent optical frequency mixing unit 406, and the first array 407. The optical anti-reflective coating 402 in FIG. 4 is plated on the waveguide optical component.

The waveguide optical component means that optical components are connected to each other by using a waveguide, to transmit an optical signal. The waveguide optical component is different from a spatial optical component, for example, a lens, a reflection mirror, or a wave plate. As the name implies, the spatial optical component is an optical component in which an optical signal is propagated in space instead of in a waveguide. Compared with the spatial optical component, in this embodiment of this application, the coherent optical receiving apparatus including the waveguide optical component has a low precision requirement for manufacture, is easy to manufacture and integrate, and facilitates large-scale production.

A total of 16 output waveguides of the first conventional 2 x 8 coherent optical frequency mixing unit 405 and the second conventional 2 x 8 coherent optical frequency mixing unit 406 are polarization-maintaining waveguides. The polarization-maintaining waveguide is briefly referred to as a polarization-maintaining fiber (polarization-maintaining fiber, PMF) for short. It should be noted that the waveguide in this embodiment of this application may be made of a material, for example, silicon, germanium, silicon dioxide, silicon nitride, or III-V This is not limited in this application.

Signal light in any polarization state is output from an optical fiber, and enters the polarization-maintaining optical waveguide through the coupling lens 401. The power beam splitter 403 splits the signal light into two parts, and the two parts respectively enter the first conventional 2 x 8 coherent optical frequency mixing unit 405 and the second conventional 2 x 8 coherent optical frequency mixing unit 406. Local oscillator light in any polarization state is output from an optical fiber, and enters the polarization-maintaining optical waveguide through the coupling lens 401. The polarization beam splitter or the polarization rotator-splitter 404 splits the local oscillator light into a polarization state X and a polarization state Y. Light in the polarization state X and light in the polarization state Y enters local oscillator light ports in the first conventional 2 x 8 coherent optical frequency mixing unit 405 and the second conventional 2 x 8 coherent optical frequency mixing unit 406.

FIG. 4 shows a function of the polarization rotator-combiner. The polarization rotator-combiner couples two beams of light in a single polarization state on one port for output, and rotates a polarization state of an optical signal in one input port by a specific angle (for example, a typical value is 90 degrees). A polarization state of an optical signal of the other input port remains unchanged.

Optionally, in this embodiment of this application, a typical value of a split ratio of the power beam splitter 403 is 50:50. Polarization-dependent losses of each of the polarization beam splitter, the polarization rotator-splitter, and the polarization rotator-combiner are less than 3 dB.

Compared with FIG. 1, the polarization beam splitting unit 101 in FIG. 1 may specifically include the power beam splitter 403 and the polarization beam splitter or the polarization rotator-splitter 404 in FIG. 4. The power beam splitter 403 is specifically configured to split the signal light in any polarization state from one beam of signal light into two beams of signal light. The polarization beam splitter or the polarization rotator-splitter 404 is specifically configured to split the local oscillator light in any polarization state into first X-polarized light and first Y-polarized light, and then respectively input the first X-polarized light and the first Y-polarized light to the first conventional coherent light frequency mixing unit and the second conventional coherent light frequency mixing unit after splitting for frequency mixing. The first X-polarized light is marked as LOx in FIG. 4, and the first Y-polarized light is marked as LOy in FIG. 4.

Similarly, the combining unit 103 in FIG. 1 may specifically include the first array 407 in FIG. 4. For functions of the combining unit 103, refer to related descriptions of the first array in FIG. 4. Details are not described herein again.

In a second implementation, the optical frequency mixing unit directly includes frequency mixers.

In the second implementation, the optical frequency mixing unit may directly include two or more frequency mixers, and the frequency mixer may be the 2 x 4 frequency mixer shown in FIG. 3, or may be a frequency mixer of another specification. This is not limited in this embodiment of this application.

The following describes in detail the coherent optical receiving apparatus provided in the embodiments of this application by using an example of four 2 x 4 frequency mixers.

FIG. 5 is another schematic diagram of an embodiment of a coherent optical receiving apparatus according to an embodiment of this application.

As shown in FIG. 5, the coherent optical receiving apparatus in this embodiment of this application includes a polarization beam splitter 503, a power beam splitter 504, a power beam splitter 505, a first frequency mixer 507, a second frequency mixer 509, a third frequency mixer 508, a fourth frequency mixer 510, a second array 511, a power beam splitter 513, a polarization beam splitter 514, and a polarization beam splitter 515, where the second array 511 includes eight polarization rotator-combiners.

The second array 511 is configured to combine light from a y^{th} port in the first frequency mixer 507 and light from a y^{th} port in the third frequency mixer 508 into one path, and combine light from a y^{th} port in the second frequency mixer 509 and light from a y^{th} port in the fourth frequency mixer 510 into one path, where y is a port number of the frequency mixer, a value of y is a positive integer less than or equal to b, b is a total quantity of ports in the frequency mixer, and a value of b is an even number greater than or equal to 0. In other words, the second array 511 is configured to combine light from ports that have a same port number and that are in the first frequency mixer 507 and the third frequency mixer 508, and combine light from ports that have a same port number and that are in the second frequency mixer 509 and the fourth frequency mixer 510.

Specifically, in FIG. 5, a total quantity of ports in the frequency mixer b is equal to 4, and the combining unit is the second array including the eight polarization rotator-combiners. A first polarization rotator-combiner combines light from a port 1 in the first frequency mixer and light from a port 1 in the third frequency mixer into one path, in other words, combines 11 and 15 shown in FIG. 5 into one path. A second polarization rotator-combiner combines light from a port 2 in the first frequency mixer and light from a port 2 in the third frequency mixer into one path, in other words, combines 12 and 16 shown in FIG. 5 into one path. A third polarization rotator-combiner combines light from a port 3 in the first frequency mixer and light from a port 3 in the third frequency mixer into one path, in other words, combines 13 and 17 shown in FIG. 5 into one path. A fourth polarization rotator-combiner combines light from a port 4 in the first frequency mixer and light from a port 4 in the third frequency mixer into one path, in other words, combines 14 and 18 shown in FIG. 5 into one path. A fifth polarization rotator-combiner combines light from a port 1 in the second frequency mixer and light from a port 1 in the fourth frequency mixer into one path, in other words, combines 19 and 113 shown in FIG. 5 into one path. A sixth polarization rotator-combiner combines light from a port 2 in the second frequency mixer and light from a port 2 in the fourth frequency mixer into one path, in other words, combines 110 and 114 shown in FIG. 5 into one path. A seventh polarization rotator-combiner combines light from a port 3 in the second frequency mixer and light from a port 3 in the fourth frequency mixer into one path, in other words, combines I11 and 115 shown in FIG. 5 into one path. An eighth polarization rotator-combiner combines light from a port 4 in the second frequency mixer and light from a port 4 in the fourth frequency mixer into one path, in other words, combines 112 and 116 shown in FIG. 5 into one path. It should be noted that I1 to 116 are output ends of the four frequency mixers. Optionally, I1 to 116 may include a polarization-maintaining waveguide.

Similar to the foregoing embodiment corresponding to FIG. 4, in FIG. 5, the power beam splitter is referred to as a BS for short, and the polarization beam splitter (polarization beam splitter, PBS) is referred to as a PBS for short. It should be noted that the polarization beam splitter may also be replaced with a polarization rotator-splitter (polarization rotator-splitter, PRS) having a similar function, and details are not described herein.

In this embodiment of this application, obtaining a plurality of paths of polarized light from local oscillator light in any polarization state may be implemented by first performing polarization state split, and then performing beam splitting processing, which is corresponding to the first implementation described in the foregoing embodiments. Alternatively, it may be implemented by first performing beam splitting processing, and then performing polarization state split, which is corresponding to the second implementation described in the foregoing embodiments. The following separately describes the two implementations. In a first implementation, polarization state split is first performed on local oscillator light, and then beam splitting processing is performed.

Specifically, the polarization beam splitting unit 101 in FIG. 1 may specifically include: one polarization beam splitter and two power beam splitters, namely, the polarization beam splitter 503, the power beam splitter 504, and the power beam splitter 505 shown in FIG. 5.

In this implementation, a manner of processing local oscillator light may be specifically as follows: The polarization beam splitter 503 splits the local oscillator light LO in any polarization state into second X-polarized light and second Y-polarized light, and respectively inputs the second X-polarized light and the second Y-polarized light to the power beam splitter 504 and the power beam splitter 505. The second X-polarized light and the second Y-polarized light are respectively marked as LOx and LOy. The power beam splitter 504 splits the second X-polarized light LOx into two beams of polarized light, namely, LOx1 and LOx2, and respectively inputs the two beams of polarized light to local oscillator light ports in the third frequency mixer 508 and the fourth frequency mixer 510. Similarly, the power beam splitter 505 splits the second Y-polarized light LOy into two beams of polarized light, namely, LOy1 and LOy2, and respectively inputs the two beams of polarized light to local oscillator light ports in the first frequency mixer 507 and the second frequency mixer 509.

Corresponding to the foregoing manner of processing the local oscillator light, the polarization beam splitting unit 101 in FIG. 1 may further include the power beam splitter 513, the polarization beam splitter 514, and the polarization beam splitter 515, to process signal light. A manner of processing signal light may be specifically as follows: The power beam splitter 513 first splits signal light S into two parts, and respectively inputs the two parts into the polarization beam splitter 514 and the polarization beam splitter 515. Further, the polarization beam splitter 514 splits a polarization state X and a polarization state Y of one part of the signal light S to obtain X-polarized light Sx1 and Y-polarized light Sy1, so that the X-polarized light Sx1 and the Y-polarized light Sy1 are respectively input to signal light input ports in the first frequency mixer 507 and the second frequency mixer 509. The polarization beam splitter 515 splits a polarization state X and a polarization state Y of the other part of the signal light S to obtain X-polarized light Sx2 and Y-polarized light Sy2, so that the X-polarized light Sx2 and the Y-polarized light Sy2 are respectively input to signal light input ports of the third frequency mixer 508 and the fourth frequency mixer 510. It is easy to understand that the foregoing manner of processing signal light is substantially a manner of splitting the signal light first and then splitting a polarization state.

In a second implementation, local oscillator light is split first, and then a polarization state is split.

In the foregoing first implementation, local oscillator light is processed in the manner of first splitting a polarization state and then splitting the light. However, signal light is processed in the manner of first splitting the light and then splitting a polarization state. In this embodiment of this application, a polarization state of local oscillator light does not need to be a linear polarization state. Therefore, the manner of processing signal light is also applicable to local oscillator light processing. In other words, in this embodiment of this application, a local oscillator light input port and a signal light input port are equivalent and may be interchanged.

Specifically, in FIG. 4, the power beam splitter 513, the polarization beam splitter 514, and the polarization beam splitter 515 may also be configured to process local oscillator light. For a manner of processing the local oscillator light, refer to the manner of processing signal light in the foregoing first implementation, and details are not described herein again. On the contrary, the polarization beam splitter 503, the power beam splitter 504, and the power beam splitter 505 are configured to process signal light. For a manner of processing the signal light, refer to the manner of processing local oscillator light in the foregoing first implementation, and details are not described herein again.

Based on the foregoing two manners of processing local oscillator light and signal light, a structure of another polarization beam splitting unit that may be further obtained fall within the protection scope of the embodiments of this application. This is not limited in this application.

Optionally, in an implementation, the polarization beam splitting unit may further include a phase shifter 506. The phase shifter 506 is configured to adjust a phase of one path of polarized light obtained by splitting local oscillator light, and a phase shift value is not equal to N times of 2π, and N=0, 1, 2, 3, .... FIG. 4 shows that the phase shifter 506 adjusts the polarized light LOy1 input to the first frequency mixer 507. Similarly, the phase shifter 506 may be further configured to adjust a phase of polarized light input to another frequency mixer other than the first frequency mixer 507.

Optionally, in an implementation, the coherent optical receiving apparatus may further include at least one of a coupling lens 501, an optical anti-reflective coating 502, and a photoelectric detector array 512. Functions and descriptions of the coupling lens 501, the optical anti-reflective coating 502, and the photoelectric detector array 512 in this embodiment of this application are similar to functions and descriptions of the coupling lens 401, the optical anti-reflective coating 402, and the photoelectric detector array 412 in the embodiment corresponding to FIG. 4. Details are not described herein again. It should be further noted that related descriptions of another part in the embodiments of this application are similar to the descriptions in the embodiment corresponding to FIG. 4. For details, refer to the related parts in the embodiment corresponding to FIG. 4. Details are not described herein again.

FIG. 6 is another schematic diagram of an embodiment of a coherent optical receiving apparatus according to an embodiment of this application.

A difference between the coherent optical receiving apparatus shown in FIG. 6 and the coherent optical receiving apparatus shown in FIG. 5 lies in that a half-wave plate (half-wave plate, HWP) (namely, an HWP 616 in FIG. 6), a plurality of coupling lenses (in the dashed circles in FIG. 6), and a plurality of refraction mirrors (a refraction mirror 617 in FIG. 6) are added. Functions of other parts are similar to those of the apparatus in the embodiment corresponding to FIG. 5. For the other parts, refer to the descriptions of the related parts in the embodiment corresponding to FIG. 5. Details are not described herein again.

The HWP 616 is configured to rotate polarization states of beams B1 to B3 (namely, the polarized light Sy1, LOy2, and Sx2) by 90 degrees, and the six newly-added coupling lenses are configured to output the six beams of light from output ports in a spatial optical component to input ports in a waveguide optical component. It should be understood that, because the half-wave plate is a spatial optical component, the half-wave plate is different from the coherent optical receiving apparatus corresponding to FIG. 5. The coherent optical receiving apparatus corresponding to FIG. 5 includes only the waveguide optical component, and the coherent optical receiving apparatus corresponding to FIG. 6 includes both the waveguide optical component and the spatial optical component.

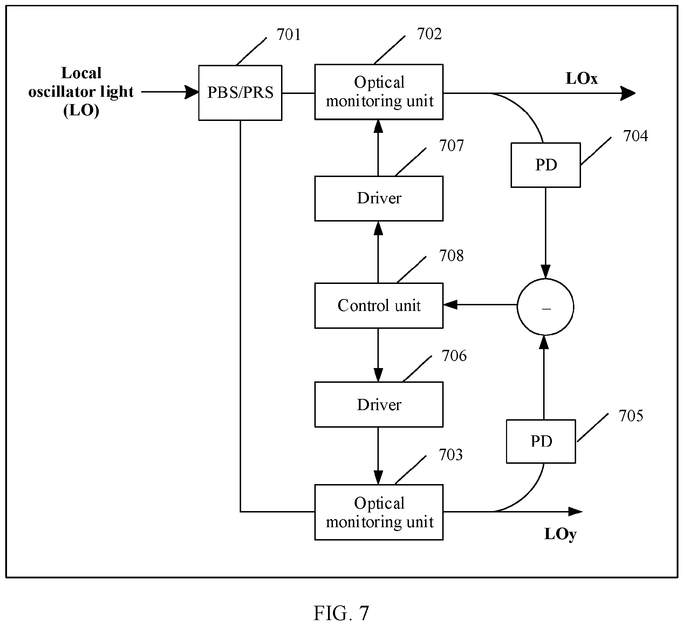

A structure shown in FIG. 7 may be used for the polarization beam splitter and the polarization rotator-splitter that are used in the coherent optical receiving apparatus in the embodiments of this application. An optical monitor is added to each of two polarized light branches to monitor a power value, and feeds the value back to a control unit. The control unit performs automatic power control based on a difference between power values of two branches of light. A specific structure includes but is not limited to the structure shown in FIG. 7.

FIG. 7 is a schematic structural diagram of a polarization beam splitter or a polarization rotator-splitter that automatically adjusts polarization state power according to an embodiment of this application.

As shown in FIG. 7, the polarization beam splitter or the polarization rotator-splitter that automatically adjusts polarization state power includes: a PBS/PRS 701, an optical monitoring unit 702, an optical monitoring unit 703, a PD 704, a PD 705, a driver 706, a driver 707, and a control unit 708. A connection relationship thereof is shown in FIG. 7.

The PD 704 and the PD 705 are configured to: respectively perform photoelectric detection on optical power of X-polarized light LOx and Y-polarized light LOy that are obtained after the PBS/PRS 701 splits local oscillator light LO, to obtain optical power values of the X-polarized light LOx and the Y-polarized light LOy, and feed the optical power values back to the control unit 708.

The control unit 708 is configured to perform automatic power control based on a difference between the optical power values detected by the PD 704 and the PD 705, to control power values of the X-polarized light LOx and the Y-polarized light LOy.

The optical monitoring unit 702 is configured to control power of the X-polarized light within a power range that is of the X-polarized light LOx and that is fed back by the control unit 708.

The optical monitoring unit 703 is configured to control power of the Y-polarized light within a power range that is of the Y-polarized light LOy and that is fed back by the control unit 708.

The driver 706 and the driver 707 are respectively configured to drive the optical monitoring unit 703 and the optical monitoring unit 702.

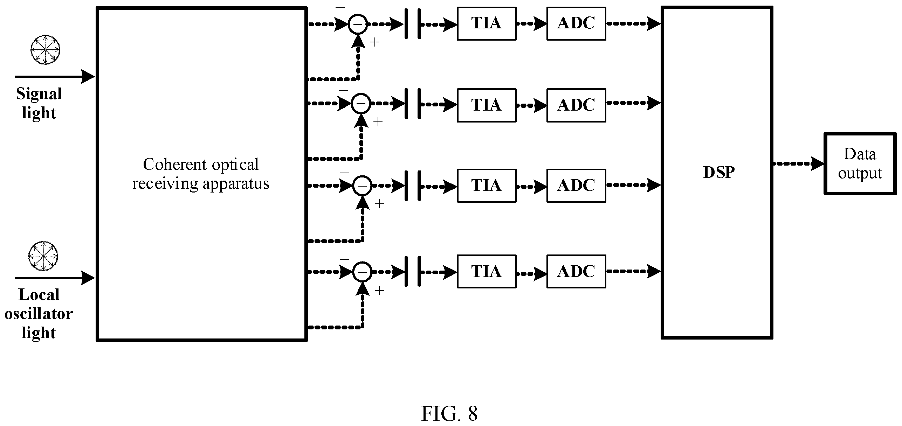

An embodiment of this application further provides an optical signal demodulation apparatus based on a coherent optical receiving apparatus. A schematic diagram of the optical signal demodulation apparatus is shown in FIG. 8. The optical signal demodulation apparatus includes a coherent optical receiving apparatus, a differential operator, a direct current filter, a trans-impedance amplifier (trans-impedance amplifier, TIA), an analog-to-digital converter (analog-to-digital converter, ADC), and digital signal processing (digital signal processing, DSP). The direct current filter is configured to perform filtering processing on a current signal output by the coherent optical receiving apparatus. The trans-impedance amplifier TIA is configured to convert a current signal into a voltage signal, so that the analog-to-digital converter performs signal identification. The analog-to-digital converter is configured to convert a voltage signal into a digital signal. The digital signal processor is configured to process a digital signal, to demodulate an optical signal. It should be noted that, for a detailed demodulation operation related to optical signal demodulation in the optical signal demodulation apparatus in this embodiment of this application, refer to related records in other related books and materials. Details are not described in this embodiment of this application.

The coherent optical receiving apparatus in FIG. 8 may be specifically the coherent optical receiving apparatus in any one of FIG. 4 to FIG. 6. The following provides description with reference to the coherent optical receiving apparatus shown in FIG. 4 to FIG. 6. Details are as follows: Four differential operators in FIG. 8 respectively performs differential operation on current signals output by a PD 1 and a PD 2, a PD 3 and a PD 4, a PD 5 and a PD 6, and a PD 7 and a PD 8. The current signal obtained after the differential operation is filtered by using the corresponding direct current filter, is converted into a voltage signal in proper amplitude by using the trans-impedance amplifier TIA, and then is converted into a digital signal by using the analog-to-digital converter ADC. Finally, a digital signal processing DSP chip performs digital processing on the digital signal and then outputs the digital signal

Based on the optical signal demodulation apparatus of the coherent optical receiving apparatus in this embodiment of this application, compared with a conventional receiving apparatus, the coherent optical receiving apparatus in this embodiment of this application outputs fewer signals, so that quantities of the differential operator, the direct current filter, the trans-impedance amplifier TIA, and the analog-to-digital converter ADC in the optical signal demodulation apparatus are reduced by half during usage, thereby reducing device costs of the optical signal demodulation apparatus.

It should be noted that, in this application, because polarization states of signal light and local oscillator light that are input into the coherent optical receiving apparatus are both random, the coherent optical receiving apparatus in the embodiments of this application is a polarization-independent optical receiving apparatus. It should be further noted that the optical signal demodulation apparatus shown in FIG. 8 is described by using an example in which the DSP processes four paths of optical signals. The optical signal demodulation apparatus in this application includes but is not limited to processing four paths of optical signals.

For a structure and a function of the coherent optical receiving apparatus shown in FIG. 8, refer to the related descriptions in the embodiments corresponding to FIG. 1 and FIG. 4 to FIG. 6. Details are not described herein again.

The coherent optical receiving apparatus and the optical signal demodulation apparatus provided in the embodiments of this application are described in detail above. The principle and implementations of this application are described in this specification by using specific examples. The descriptions about the embodiments are merely provided to help understand the method and core ideas of this application. In addition, a person of ordinary skill in the art can make changes to this application in terms of the specific implementations and application scopes according to the ideas of this application. In conclusion, the content of the specification shall not be construed as a limit to this application.

## Claims

1. A coherent optical receiving apparatus, comprising:
a polarization beam splitting unit, an optical frequency mixing unit, and a combining unit, wherein the polarization beam splitting unit is connected to an input end of the optical frequency mixing unit, and the combining unit is connected to an output end of the optical frequency mixing unit, wherein
the polarization beam splitting unit is configured to receive local oscillator light in any polarization state, and split the local oscillator light to obtain first polarized light in a linear polarization state, so as to input the first polarized light to the optical frequency mixing unit;
the optical frequency mixing unit is configured to perform frequency mixing on the first polarized light and second polarized light, and output mixed light to the combining unit, wherein the second polarized light is polarized light in a linear polarization state obtained by splitting signal light; and
the combining unit is configured to combine every two paths of light output by the optical frequency mixing unit into one path for output.

2. The apparatus according to claim 1, wherein the optical frequency mixing unit comprises a conventional coherent optical frequency mixing unit or a frequency mixer, and the conventional coherent optical frequency mixing unit is obtained by integrating the frequency mixer.

3. The apparatus according to claim 2, wherein if the optical frequency mixing unit is the conventional coherent optical frequency mixing unit, the polarization beam splitting unit comprises a polarization beam splitter or a polarization rotator-splitter, and the combining unit comprises a polarization rotator-combiner.

4. The apparatus according to claim 2, wherein if the optical frequency mixing unit is the frequency mixer, the combining unit comprises a polarization rotator-combiner.

5. The apparatus according to claim 3, wherein the optical frequency mixing unit comprises a first conventional coherent optical frequency mixing unit and a second conventional coherent optical frequency mixing unit, the polarization beam splitting unit is a first polarization beam splitter or a first polarization rotator-splitter, and the combining unit is a first array comprising at least two polarization rotator-combiners;
the first polarization beam splitter or the first polarization rotator-splitter is configured to split the local oscillator light into first X-polarized light and first Y-polarized light, to respectively input the first X-polarized light and the first Y-polarized light to the first conventional coherent optical frequency mixing unit and the second conventional coherent optical frequency mixing unit; and
the first array is configured to combine light from an x^{th} port in the first conventional coherent optical frequency mixing unit and light from an (x + a/2)^{th} port in the second conventional coherent optical frequency mixing unit into one path, and combine light from an (x + a/2)^{th} port in the first conventional coherent optical frequency mixing unit and light from an x^{th} port in the second conventional coherent optical frequency mixing unit into one path, wherein x is a port number of the conventional coherent optical frequency mixing unit, a value of x is a positive integer less than or equal to (a/2), a is a total quantity of polarization rotator-combiners, a value of a is an even number greater than or equal to 0, and a total quantity of ports in the first conventional coherent optical frequency mixing unit and a total quantity of ports in the second conventional coherent optical frequency mixing unit are both equal to a.

6. The apparatus according to claim 4, wherein the optical frequency mixing unit comprises a first frequency mixer, a second frequency mixer, a third frequency mixer, and a fourth frequency mixer, and the combining unit is a second array comprising at least two polarization rotator-combiners; and
the second array is configured to combine light from a y^{th} port in the first frequency mixer and light from a y^{th} port in the third frequency mixer into one path, and combine light from a y^{th} port in the second frequency mixer and light from a y^{th} port in the fourth frequency mixer into one path, wherein y is a port number of the frequency mixer, a value of y is a positive integer less than or equal to b, b is a total quantity of ports in one frequency mixer, and a value of b is an even number greater than or equal to 0.

7. The apparatus according to claim 4 or 6, wherein the polarization beam splitting unit comprises a power beam splitter and a polarization beam splitter, or the polarization beam splitting unit comprises a power beam splitter and polarization rotator-splitter.

8. The apparatus according to claim 7, wherein if the polarization beam splitting unit comprises a second polarization beam splitter, a first power beam splitter, and a second power beam splitter, the second polarization beam splitter is configured to split the local oscillator light into second X-polarized light and second Y-polarized light, and respectively input the second X-polarized light and the second Y-polarized light to the first power beam splitter and the second power beam splitter; the first power beam splitter is configured to split the second X-polarized light into two parts, and respectively input the two parts to the first frequency mixer and the second frequency mixer; and the second power beam splitter is configured to split the second Y-polarized light into two parts, and respectively input the two parts to the third frequency mixer and the fourth frequency mixer.

9. The apparatus according to claim 7, wherein if the polarization beam splitting unit comprises a third power beam splitter, a third polarization beam splitter, and a fourth polarization beam splitter, the third power beam splitter is configured to split the local oscillator light into two parts, and respectively input the two parts to the third polarization beam splitter and the fourth polarization beam splitter; the third polarization beam splitter is configured to split one part of the local oscillator light into third X-polarized light and third Y-polarized light, and respectively input the third X-polarized light and the third Y-polarized light to the first frequency mixer and the second frequency mixer; and the fourth polarization beam splitter is configured to split the other part of the local oscillator light into fourth X-polarized light and fourth Y-polarized light, and respectively input the fourth X-polarized light and the fourth Y-polarized light to the third frequency mixer and the fourth frequency mixer.

10. The apparatus according to any one of claims 6 to 9, wherein the polarization beam splitting unit further comprises at least one of the following: a phase shifter and a half-wave plate; the phase shifter is configured to adjust a phase of light, before the light is input to a local oscillator light port in the first frequency mixer, the second frequency mixer, the third frequency mixer, or the fourth frequency mixer; and the half-wave plate is configured to rotate a polarization state of polarized light obtained by splitting the local oscillator light.

11. The apparatus according to any one of claims 1 to 10, wherein the coherent optical receiving apparatus may further comprise at least one of the following: an optical anti-reflective coating, an optical waveguide, a lens, an optical monitor, or a photoelectric detector.

12. An optical signal demodulation apparatus, wherein the optical signal demodulation apparatus comprises the coherent optical receiving apparatus according to any one of claims 1 to 10.

13. The optical signal demodulation apparatus according to claim 12, wherein the optical signal demodulation apparatus further comprises at least one of the following: a direct current filter, a trans-impedance amplifier, an analog-to-digital converter, or a digital signal processor;
the direct current filter is configured to perform filtering processing on a current signal output by the coherent optical receiving apparatus;
the trans-impedance amplifier is configured to convert the current signal into a voltage signal;
the analog-to-digital converter is configured to convert the voltage signal into a digital signal; and
the digital signal processor is configured to process the digital signal, to demodulate an optical signal
